Europäisches Patentamt

European Patent Office

Office européen des brevets

(19)

(11) **EP 1 429 080 A1**

(12) **EUROPEAN PATENT APPLICATION**
published in accordance with Art. 158(3) EPC

(43) Date of publication:
**16.06.2004 Bulletin 2004/25**

(51) Int Cl.⁷: **F24D 13/02**, H05B 3/20,
E04F 15/18

(21) Application number: **02767962.0**

(22) Date of filing: **18.09.2002**

(86) International application number:
**PCT/JP2002/009552**

(87) International publication number:
**WO 2003/027574 (03.04.2003 Gazette 2003/14)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **20.09.2001 JP 2001287684**

(71) Applicant: **Nippon Oil Corporation
Tokyo 105-8412 (JP)**

(72) Inventors:
• **KOJIMA, Akiyoshi,
c/o NIPPON OIL CORPORATION
Yokohama-shi, Kanagawa 231-0815 (JP)**

• **KOHNO, Takefumi,
c/o NIPPON OIL CORPORATION
Minato-ku, Tokyo 105-8412 (JP)**
• **FUKAI, Kazuo
Yokohama-shi, Kanagawa 224-0023 (JP)**

(74) Representative: **Janson, Ronny et al
Ehrner & Delmar Patentbyra AB,
Box 10316
100 55 Stockholm (SE)**

(54) **LOW TEMPERATURE BURN PREVENTING ELECTRIC FLOOR HEATING SYSTEM&comma;
ELECTRIC FLOOR HEATING PANEL&comma; FLOOR HEATING FLOOR MATERIAL&comma;
AND ELECTRIC FLOOR HEATING DEVICE**

(57) An electric floor heating system, comprising an electric floor heating panel and a floor heating material formed by laminating integrally an upper material with a thickness of (d), a heat diffusing material with a thickness of (t), and a lower material, wherein the upper material thickness (d) and the heat diffusing material thickness (t) are set to fulfill relational expression (I):

$$t \geqq a \times d^2 + b \qquad (I)$$

(d: 0.01 to 12 mm, t: 30 to 1,000 μm)
into which coefficients a and b predetermined by the maximum value (p2) of the maximum power are introduced, thereby accomplishing a comfortable heating environment without causing low temperature burn.

Fig.1

EP 1 429 080 A1

**Description**

[Technical Field]

This invention relates to electric floor heating systems comprising an electric floor heating panel and a floor material placed thereon; electric floor heating panels and floor materials used for installing the systems; and electric floor heating devices. The present invention relates particularly to low-temperature burn preventing electric floor heating systems with which floor heating can be comfortably enjoyed without suffering from low-temperature burn caused by contacting the floor surface; electric floor heating panels; floor materials for floor heating; and electric floor heating devices.

[Background Art]

In general, conventional floor heating systems comprise a heating device, i.e., heating element and a floor material placed thereon. The heating systems are classified by heating mode into an electric type and a hot water type. For example, floor heating systems using a heating element in the form of a heating cable such as Nichrome wire or in the form of a planar heating element formed from carbon-based fiber and carbon black are known as such electric types, while those using a hot water pipe through which a hot water is circulated are known as such hot water types. For the purpose of eliminating the unevenness of heat distribution on a floor surface during floor heating, a metal with large heat conductivity, such as aluminum foil, aluminum plate or iron plate is generally disposed between a heating element and a floor material. More specifically, a method has been used in which the floor surface temperature distribution is uniformed by diffusing horizontally the heat generated from the heating element. The electric type floor heating systems have an advantage of easy installation, compared with those of the hot water type.

On the other hand, for the purpose of preventing a floor heating floor material from warping with moisture and facilitating the thermal conductivity, Japanese Patent Laid-Open Publication No. 7-292943 proposes a floor material composed of a natural timber attached to a plywood board whose both surfaces are covered with an aluminum sheet.

In order to keep a room at a comfortable temperature, it is necessary to control the quantity of heat radiation from the floor heater depending on the heat load of the room. In general, the room temperature is controlled using a room temperature sensor, a floor temperature sensor, or the combination thereof. In the case where the heat load of the room is small, the room can be kept at a comfortable temperature even though the quantity of heat radiation per unit area of the floor heater is relatively small. Thereupon, the difference in temperature between the floor surface and the room space is small. Therefore, even in the case where a part of a human body is in contact with a certain part of the floor heater for a long period of time, he or she feels comfortable with heat conduction.

However, in order to keep the room at a comfortable temperature even though the heat load of the room is increased, a large quantity of heat radiation per unit area of the floor heater is required and thus involves the increase of the floor surface temperature. In the case of such a large quantity of heat radiation per unit area of the floor heater, while a part of a human body is in contact with a certain portion of the floor heater for a long period of time, undiffused heat, i.e., stuffy heat generates due to low heat conductivity on the floor material (wood material) in the horizontal direction regardless of the presence of a heat diffusing material provided on the heating element surface of the floor heater. As a result, the temperature of the floor surface portion of the floor material in contact with the human body becomes higher than that of a non-contacting surface portion and would cause low-temperature burn on the human body surface. A method for refraining the heat radiation quantity per unit area of a floor heater from exceeding a certain level has been proposed as means for avoiding the above-mentioned problem. However, when the heat load of a room is large, the room temperature is not increased sufficiently due to the limited heat radiation quantity of the floor heater and thus an additional auxiliary heating device is needed so as to keep the room at a comfortable temperature. Under such a situation, not only the heating equipment expense increases but also it is difficult to accomplish a comfortable heating environment peculiar to the floor heating, such as providing the upper body of a person in the room with cool feeling and the lower body with warm feeling and providing a warm space free of uneven heat distribution.

The inventors of the present invention have already found that the temperature of a floor portion contacting a human body on an electric floor heater (hereinafter referred to as "contact temperature") is varied by changing the thickness of an aluminum sheet disposed between a floor heating panel and a floor material and proposed a method of decreasing the contact temperature by increasing the thickness of the aluminum sheet ("Evaluation of safety of a floor heating system concerning the temperature increase due to the contact with a floor Inspection of effects to decrease increased temperature due to the contact with a floor using a heat equalizing panel-" by Otake, Fukai, and Nagamura (Preliminary Reports: Architectural Institute of Japan Symposium, Academic Lecture Summary D-Environmental Engineering, pages 925 to 926, 1999)). However, this method requires a time to install a floor heating system because an aluminum sheet is not united with the floor material beforehand and also requires the special technical know how for determining the thickness of the aluminum sheet in view of the power or hot water temperature of the floor heater.

The object of the present invention is to provide an electric floor heating system which can accomplish a comfortable heating environment without causing low-temperature burn and using any auxiliary heating device.

The other object of the present invention is to provide an electric floor heating panel and a floor material for floor heating, which make the installation of the foregoing electric heating system easy and efficient, and an electric floor heating device.

Generally, it is said that no irreversible change occurs in a human body tissues if the temperature thereof is kept at 42 °C or lower, for example as described in "Science of Human Body and Heat Flow" by Yamada and Tanazawa et al. (Techno-Life Sensho, published by Ohmsha, Ltd., October 30, 1998). From this point of view, the inventors of the present invention proceeded with a study on a method for preventing low-temperature burn caused by the above-described stuffy heat. As a result, they found that in order to prevent low-temperature burn and accomplish a more comfortable heating environment, it was necessary to suppress the temperature of a portion of a human body in contact with a floor surface of a floor heater to 42 °C or below even in the case where the heat load of the room is large and thus a large quantity of heat radiation per unit area from the floor heater is required. They also found that it was effective to modify the structure of a floor material largely contributing the heat conductivity of an floor heater and particularly to adjust the thickness (t) of a heat diffusing material and the distance (d) therefrom to the floor surface, i.e., the thickness of an upper portion material based on the quantity of heat radiation per unit area from a heating device; a floor material can be designed easily and efficiently based on the quantity of heat radiation from any heating device (the surface temperature of the heating device) by adjusting the thickness of each of the upper material and the heat diffusing material using a specific relational expression (I) obtained by introducing the data experimentally calculated from a relation of the quantity of heat radiation from the heating device with (d) and (t) ; and thus the intended floor heating system could be produced.

Furthermore, the inventors of the present invention found that upon installation of the above-described electric floor heating system, the use of the combination of a floor material with a specific structure obtained based on the above relational expression (I) and an electric floor heating panel of a specific maximum power enabled to install the electric heating system with ease which can accomplish a comfortable heating environment without causing low-temperature burn.

[Disclosures of the Invention]

According to the present invention, there is provided an electric floor heating system capable of preventing low-temperature burn which system comprises an electric floor heating panel and a floor material placed thereon; wherein the floor material is formed by laminating integrally an upper material having a thickness (d) of from 0.01 to 12 mm and forming the floor surface, a heat diffusing material having a thickness (t) of from 30 to 1,000 μm and disposed below the upper material horizontally to the floor surface, and a lower material whose lower surface contacts the panel; and wherein when the panel is selected from those whose minimum value (p1) of the maximum power is 65 W/m$^2$ and maximum value (p2) of the maximum power is any of (1) to (12) below, the upper material thickness (d) and the heat diffusing material thickness (t) are set to fulfill relational expression (I):

$$t \geqq a \times d^2 + b \tag{I}$$

into which coefficients a and b predetermined by the maximum value (p2) of the maximum power are introduced, such that the floor material is so constructed that with the floor surface blocked by a human body and heated by the panel selected, the contacting surface temperature of the human body is kept at 42 °C or below:

(1) when p2 is 140 W/m$^2$, a is 2.1 and b is 50;
(2) when p2 is 150 W/m$^2$, a is 2.9 and b is 71;
(3) when p2 is 160 W/m$^2$, a is 4.5 and b is 113;
(4) when p2 is 170 W/m$^2$, a is 7.6 and b is 163;
(5) when p2 is 180 W/m$^2$, a is 17.9 and b is 228;
(6) when p2 is 230 W/m$^2$, a is 69.4 and b is 553;
(7) when p2 is 240 W/m$^2$, a is 79.7 and b is 618;
(8) when p2 is 250 W/m$^2$, a is 90.0 and b is 683;
(9) when p2 is 260 W/m$^2$, a is 100.3 and b is 748;
(10) when p2 is 270 W/m$^2$, a is 110.6 and b is 813;
(11) when p2 is 280 W/m$^2$, a is 120.9 and b is 878; and

(12) when p2 is 290 W/m$^2$, a is 131.2 and b is 943.

In this specification, the definition "minimum value (lower limit value) (p1) of the maximum power" denotes a minimum heat radiation quantity (W/m$^2$) required to keep a comfortable room temperature in conformity with the heat load per area of a room where a heating system is to be installed. The minimum value (p1) of the maximum power is derived from [(the maximum heat load per unit area predetermined based on the type of a building such as wooden houses or reinforced concrete condominiums) / 0.7 (the maximum installation area rate)] and is 65 W/m$^2$, preferably 90 W/m$^2$ commonly for each panel. The definition "maximum value (upper limit value) (p2) of the maximum power" denotes a maximum heat radiation quantity (W/m$^2$) of each panel.

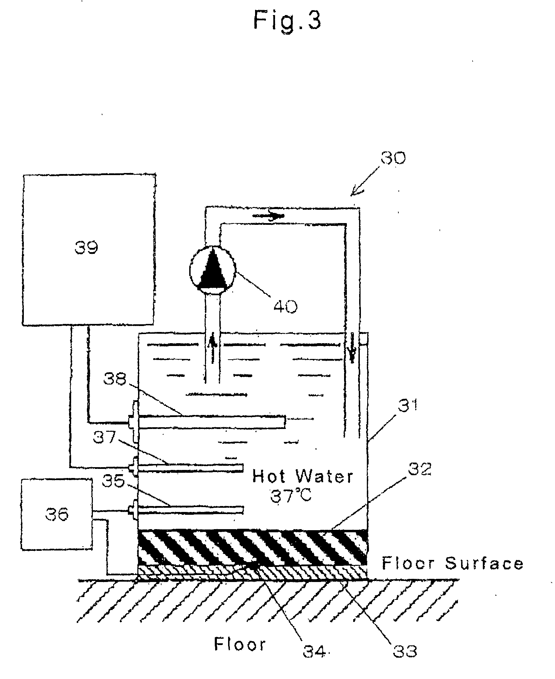

Furthermore, in the specification, the definition "human body surface temperature" denotes a human body skin surface temperature, i.e., a temperature of heat which a person feels on his or her skin through his or her clothes from a floor surface contacting with and blocked by his or her body. The human body skin surface temperature varies depending on physical conditions of the human body, a human body portion contacting a floor, contacting pressure or contacting time. Therefore, in this specification, the human body surface temperature is defined by a temperature measured using an apparatus (a floor contact temperature estimating apparatus "Estimated Floor Contact Temperature meter, EFCT meter") which can conduct a measurement the result of which is closes to that obtained by actually measuring the contact temperature between the human body skin surface and the floor. This floor contact temperature estimating apparatus (see Fig. 3) is described in Japanese Patent Laid-Open Publication No. 2001-272284 "Evaluation Apparatus for Floor Heating".

According to another aspect of the present invention, there is provided a panel for an electric floor heating, formed by connecting foldably a predetermined number of electric heating boards to each other, wherein the panel is so designed as to cover 60 to 70 percent of a room where the panel is to be installed; the minimum value (p1) of the maximum power of the panel is 65 W/m$^2$ and the maximum value (p2) of the maximum power of the panel is limited depending on a floor material combined therewith; the floor material is formedby laminating integrally an upper material having a thickness (d) of from 0.01 to 12 mm and forming the floor surface, a heat diffusing material having a thickness (t) of from 30 to 1,000 μm and disposed below the upper material horizontally to the floor surface, and a lower material disposed below the heat diffusing material; and when the upper material thickness (d) and the heat diffusing material thickness (t) fulfill any of the relations of (1) to (12) below, the maximum value (p2) of the maximum power is determined as follows:

(1) when $t \geqq 2.1 \times d^2 + 50$ is fulfilled, p2 is 140 W/m$^2$;
(2) when $t \geqq 2.9 \times d^2 + 71$ is fulfilled, p2 is 150 W/m$^2$;
(3) when $t \geqq 4.5 \times d^2 + 113$ is fulfilled, p2 is 160 W/m$^2$;
(4) when $t \geqq 7.6 \times d^2 + 163$ is fulfilled, p2 is 170 W/m$^2$;
(5) when $t \geqq 17.9 \times d^2 + 228$ is fulfilled, p2 is 180 W/m$^2$;
(6) when $t \geqq 69.4 \times d^2 + 553$ is fulfilled, p2 is 230 W/m$^2$;
(7) when $t \geqq 79.7 \times d^2 + 618$ is fulfilled, p2 is 240 W/m$^2$;
(8) when $t \geqq 90.0 \times d^2 + 683$ is fulfilled, p2 is 250 W/m$^2$;
(9) when $t \geqq 100.3 \times d^2 + 748$ is fulfilled, p2 is 260 W/m$^2$;
(10) when $t \geqq 110.6 \times d^2 + 813$ is fulfilled, p2 is 270 W/m$^2$;
(11) when $t \geqq 120.9 \times d^2 + 878$ is fulfilled, p2 is 280 W/m$^2$; and
(12) when $t \geqq 131.2 \times d^2 + 943$ is fulfilled, p2 is 290 W/m$^2$.

According to further another aspect of the present invention, there is provided a low-temperature burn preventing floor heating floor material, wherein the floor material is formed by laminating integrally an upper material having a thickness (d) of from 0.01 to 12 mm and forming the floor surface, a heat diffusing material having a thickness (t) of from 30 to 1,000 μ m and disposed below the upper material horizontally to the floor surface, and a lower material disposed below the heat diffusing material; the floor material is formed integrally with a panel whose minimum value (p1) of the maximum power is 65 w/m$^2$ and maximum value (p2) of the maximum power is any of those in (1) to (12) below; and the upper material thickness (d) and the heat diffusing material thickness (t) are determined so as to fulfill any of the relations (1) to (12) below corresponding to the maximum value (p2) of the maximum power:

(1) when p2 is 140 W/m$^2$, $t \geqq 2.1 \times d^2 + 50$;
(2) when p2 is 150 W/m$^2$, $t \geqq 2.9 \times d^2 + 71$;
(3) when p2 is 160 W/m$^2$, $t \geqq 4.5 \times d^2 + 113$;
(4) when p2 is 170 W/m$^2$, $t \geqq 7.6 \times d^2 + 163$;
(5) when p2 is 180 W/m$^2$, $t \geqq 17.9 \times d^2 + 228$;
(6) when p2 is 230 W/m$^2$, $t \geqq 69.4 \times d^2 + 553$;

(7) when p2 is 240 W/m$^2$, t $\geqq$ 79.7 x d$^2$+618;

(8) when p2 is 250 W/m$^2$, t $\geqq$ 90.0 x d$^2$+683;

(9) when p2 is 260 W/m$^2$, t $\geqq$ 100.3 x d$^2$+748;

(10) when p2 is 270 W/m$^2$, t $\geqq$ 110.6 x d$^2$+813;

(11) when p2 is 280 W/m$^2$, t $\geqq$ 120.9 x d$^2$+878; and

(12) when p2 is 290 W/m$^2$, t $\geqq$ 131.2 x d$^2$+943.

According to further another aspect of the present invention, there is provided an electric floor heating device which is the combination of an electric floor heating panel formed by connecting foldably a predetermined number of electric heating boards to each other and a floor material, wherein the minimum value (p1) of the maximum power of the panel is 65 W/m$^2$ and the maximum value (p2) of the maximum power of the panel is limited depending on a floor material combined therewith; the floor material is formed by laminating integrally an upper material having a thickness (d) of from 0.01 to 12 mm and forming the floor surface, a heat diffusing material having a thickness (t) of from 30 to 1,000 μm and disposed below the upper material horizontally to the floor surface, and a lower material disposed below the heat diffusing material; and when the upper material thickness (d) and the heat diffusing material thickness (t) fulfill any of the relations of (1) to (12) below, the maximum value (p2) of the maximum power is determined as follows:

(1) when t $\geqq$ 2.1 x d$^2$+50 is fulfilled, p2 is 140 W/m$^2$;

(2) when t $\geqq$ 2.9 x d$^2$+71 is fulfilled, p2 is 150 W/m$^2$;

(3) when t $\geqq$ 4.5 x d$^2$+113 is fulfilled, p2 is 160 W/m$^2$;

(4) when t $\geqq$ 7.6 x d$^2$+163 is fulfilled, p2 is 170 W/m$^2$;

(5) when t $\geqq$ 17.9 x d$^2$+228 is fulfilled, p2 is 180 W/m$^2$;

(6) when t $\geqq$ 69.4 x d$^2$+553 is fulfilled, p2 is 230 W/m$^2$;

(7) when t $\geqq$ 79.7 x d$^2$+618 is fulfilled, p2 is 240 W/m$^2$;

(8) when t $\geqq$ 90.0 x d$^2$+683 is fulfilled, p2 is 250 W/m$^2$;

(9) when t $\geqq$ 100.3 x d$^2$+748 is fulfilled, p2 is 260 W/m$^2$;

(10) when t $\geqq$ 110. 6 x d$^2$+813 is fulfilled, p2 is 270 W/m$^2$;

(11) when t $\geqq$ 120.9 x d$^2$ + 878 is fulfilled, p2 is 280 W/m$^2$; and

(12) when t $\geqq$ 131.2 x d$^2$+943 is fulfilled, p2 is 290 W/m$^2$.

The present invention will be described in more details below.

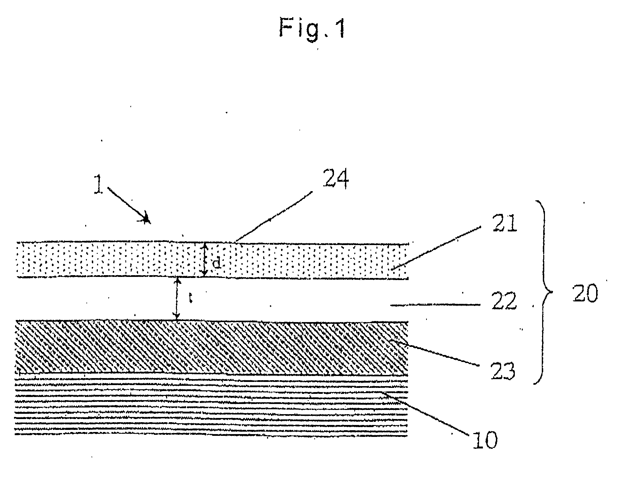

Fig. 1 schematically shows the structure of a low-temperature burn preventing electric floor heating system (hereinafter may be merely referred to as "floor heating system" or "system").

As shown in Fig. 1, the electric floor heating system 1 comprises an electric floor heating panel (panel heater) 10 and a floor material 20 placed thereon. The floor material 20 comprises an upper material 21 forming the floor surface, a heat diffusing material 22 disposed below the upper material horizontally to the floor surface 24, and a lower material 23 disposed such that the lower surface thereof comes into contact with the panel. These materials are integrally laminated. That is, the floor material has a three-layered structure sandwiching the heat diffusing material between the upper and lower material layers.

The upper material 21 is preferably formed from wood material and may be pure wood material, plywood, MDF (Medium Density Fiber) board, or HDF (High Density Fiber) board. Other than these materials, finishing materials such as vinyl chloride sheets, soundproof direct stuck-type facing plywood, carpets, tatami mats, tiles, and marble slabs may also be used. The thickness (d) of the upper material 21 is from 0.01 to 12 mm, preferably 0.3 to 10 mm, and more preferably 0.4 to 10 mm.

The heat diffusing material 22 is preferably a material higher in heat conductivity than woody materials and may be a metallic material such as aluminum, copper, and magnesium. Alternatively, non-metallic materials such as carbon fibers and graphite may be used as materials with high heat conductivity. The heat conductivity of the heat diffusing material is preferably within the range of 100 to 500 W/mK. In the present invention, aluminum is preferably used. The thickness (t) of the heat diffusing material is from 30 to 1,000 μm, preferably 100 to 500 μm.

The lower material 23 is preferably formed from a wood material like upper material. The thickness of the lower material is determined by considering the total thickness of the floor material but is generally form 0.1 to 39.96 mm, preferably 3 to 15 mm.

The above-described upper material, heat diffusing material, and lower material are generally laminated and formed integrally using an adhesive. Examples of such an adhesive are urea resins, urea/melamine resins, phenol resins, and aqueous vinyl urethane resins. When the upper and lower materials are formed from wood material, the materials and the heat diffusing material can be adhered to each other by hot-press. In the present invention, the total thickness of the floor material is preferably from 2 to 40 mm, more preferably 4 to 15 mm.

No particular limitation is imposed on the electric floor heating panel used in the system of the present invention, and thus it may be any conventional one used for this purpose. Examples of such conventional heating panels are those in the form selected depending on the type of heating elements, such as a board, a mat, a sheet, a cable, a panel, a pipe, other heating devices, and heat generating means with an ondol structure to be placed underneath of a floor. The floor heating panel used in the present invention may be any of these conventional ones but is preferably an electric floor heating panel composed of a plurality of electric heating boards foldably connected to each other (hereinafter may be referred to as "panel"), disclosed in Japanese Patent Laid-Open Publication No. 2000-081221. The use of this type of panel makes the installation of the system easy. The details of this panel will be described later.

The above-described panel composed of a plurality of electric heating boards is so designed as to cover 50 to 70 percent, preferably 60 to 70 percent of a room where the panel is to be installed. Whereby, the number of electric heating boards required for the floorage of the room where the panel is installed can be prepared, leading to an easy installation adopted to the floorage of the room.

Next, described will be a method of producing an electric floor heating system by selecting a floor material suitable for a panel of any heat radiation quantity (the maximum power of the heater) to be used.

First of all, the relation between the upper material thickness (d) mm and the heat diffusing material thickness (t) $\mu$m is represented by the following relational expression:

$$t \geqq a \times d^2 + b \tag{I}$$

wherein the coefficients a and b are experimentally determined by the inventors of the present invention based on the maximum power (p2: W/m$^2$) of various panels and thus are predetermined based on every maximum powers. In the present invention, as shown in Table 1 below, the coefficients a and b are predetermined by the following maximum power defined in (1) to (12).

Table 1

| Panel Maximum Power (p2) (W/m$^2$) | | a | b |
|---|---|---|---|
| (1) | 140 | 2.1 | 50 |
| (2) | 150 | 2.9 | 71 |
| (3) | 160 | 4.5 | 113 |
| (4) | 170 | 7.6 | 163 |
| (5) | 180 | 17.9 | 228 |
| (6) | 230 | 69.4 | 553 |
| (7) | 240 | 79.7 | 618 |
| (8) | 250 | 90.0 | 683 |
| (9) | 260 | 100.3 | 748 |
| (10) | 270 | 110.6 | 813 |
| (11) | 280 | 120.9 | 878 |
| (12) | 290 | 131.2 | 943 |

The above relational expression (I) indicates that the heat diffusing material thickness (t) and the upper material thickness (d) are in a quadratic inequality relation.

For example, in the case where the maximum power of an arbitrary selected panel is 126 W/m$^2$, the above relational expression (I) is given using the coefficients a and b for a panel with the maximum power of 140 W/m$^2$, i.e., a = 2.1, b = 50, as follows:

$$t \geqq 2.1 \times d^2 + 50.$$

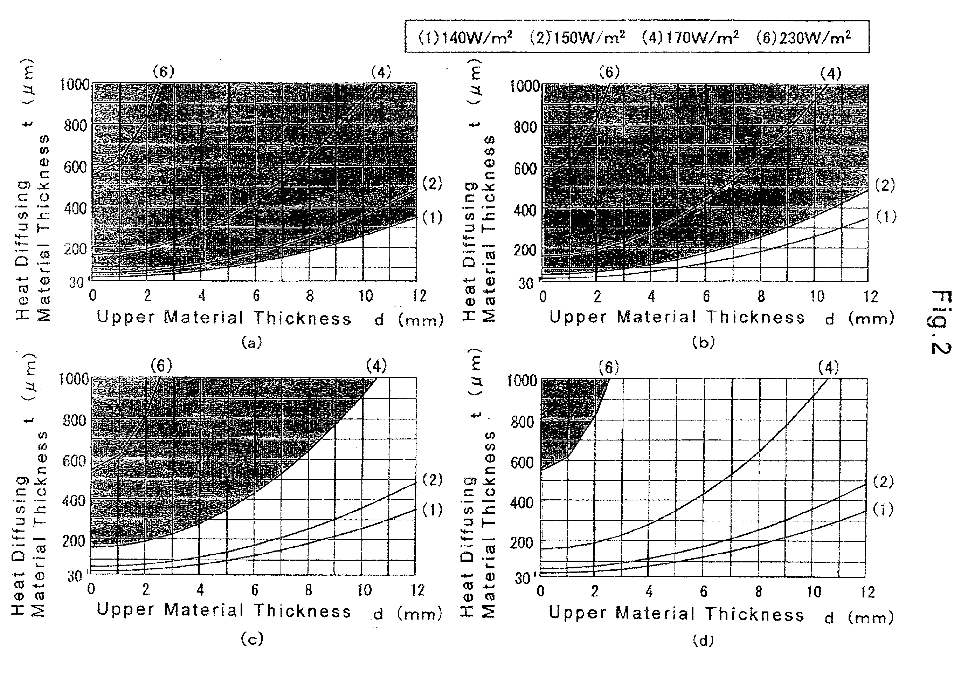

As apparent from Table 1, since the coefficients a andb increase as the maximum power of a panel increases, the range of t derived from the expression (I) will be narrowed. Figs. 2 show these relations. Figs. 2 are graphs each plotting the heat diffusing material thickness (t) as the ordinate and the upper material thickness (d) as the abscissa for each of panels whose maximum power is (1) 140 W/m$^2$, (2) 150 W/m$^2$, (4) 170 W/m$^2$, and (6) 230 W/m$^2$, respectively. For example, as apparent from Figs. 2, in the case of using a panel whose maximum power is 140 W/m$^2$, the degrees of freedom in selecting the heat diffusing material thickness (t) and the upper material thickness (d) are most increased (the dark portion surrounded by the curve (1) in Fig. 2 (a)). The quadric curve shifts from Fig. 2 (b) to (d) as the maximum power increases. When the maximum power of a panel is 230 W/m$^2$ (the dark portion surrounded by the curve (6) in Fig. 2 (d)), the degrees of freedom are decreased and thus the range of t will be narrowed.

When a floor material is designed from the above relational expression (I) and the upper material thickness (d) is decreased, i.e., the distance from the surface of the heat diffusing material to the floor surface is shortened, the heat diffusing material thickness (t) can be decreased. Whereas, when the upper material thickness (d) is increased, i.e., the distance from the surface of the heat diffusing material to the floor surface is elongated, the heat diffusing material thickness (t) can be increased. This relation can be applied to the power of any panel when the coefficients a and b of the maximum power (1) to (12) close to that of the any panel are introduced into relational expression (I).

Therefore, a suitable floor material free from low-temperature burn can be designed efficiently and easily by setting the upper material thickness (d) and the heat diffusing material thickness (t) within the above predetermined range of thickness (d) and (t) thereby obtaining a floor heating system capable of accomplishing a comfortable heating environment.

The electric floor heating system of the present invention can provide a panel which is free from low-temperature burn and capable of providing a comfortable floor heating space, suitable for a floor material with a predetermined structure, i.e., a floor selected). The present invention can also provide easily a floor material suitable for an electric floor heating panel with any maximum power (a panel selected) . For example, when a floor material is such designed that the upper material thickness (d) and the heat diffusing material thickness (t) fulfill the relation of (1) $t \geqq 2.1 \times d^2 + 50$ for a room where the system is to be installed, the system of the present invention can be installed with ease by combining the floor material with a panel of the maximum power (p2) of 140 W/m$^2$. On the other hand, for example, when the heater is designed using a panel of the maximum power (p2) of 140 W/m$^2$, it is combined with a floor material fulfilling the relation of (1) $t \geqq 2.1 \times d^2 + 50$ thereby installing the system of the present invention with ease. Similarly, when a floor material is designed such that the upper material thickness (d) and the heat diffusing material thickness (t) fulfill the relation of one of the relational expressions in (2) to (12) described above or when a panel is designed based on any one of the maximum powers defined in (2) to (12), the floor material or the panel is combined with the corresponding panel or floor material thereby installing the system of the present invention easily.

Next, the electric floor heating panel used in the present invention will be further described.

The electric floor heating panel comprises a plurality of electric heating boards foldably connected to each other.

First of all, the electric heating board will be described.

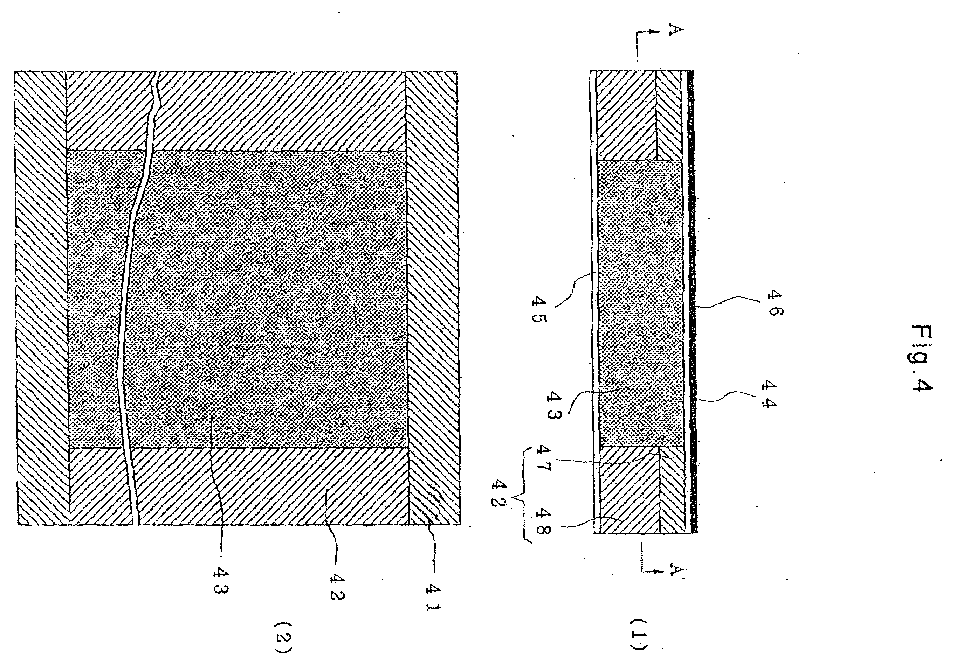

The electric heating board used herein denotes a unit of a heat-generating device constituting a panel. The electric heating board generates heat with a supply of current and is equipped with a safety for providing heat-resistance during the use and preventing the temperatures of itself and the surrounding from excessively increasing. Figs. 4 show a preferred embodiment of the electric heating board 41 used in the present invention. Fig. 4 (1) is a vertical cross-sectional view and Fig. 4 (2) is a cross sectional plan view along the A-A' line in Fig. 4 (1).

The electric heating board 41 comprises frame member 42 with a certain strength; a light-weight heat-insulating material 43 with excellent heat-retaining properties disposed inside the frame member; a planar heating element 44 fixed on the upper surface; and a reinforcing sheet 45 fixed on the lower surface. If necessary, a heat equalizing material 46 may be fixed on the upper or lower surface of the planar heating element 44. The planar heating element, reinforcing sheet, and heat equalizing material may be fixedbymeans of adhering, nailing, fitting, or sticking using a double-faced tacky tape. The whole board is decreased in weight and enhanced in strength and can be prevented from deforming such as bending by its own weight by disposing the frame only around the its periphery. Even when the panel is constituted by a plurality of heating boards, the panel is improved in total treatability and is easily unfold upon installation. Although in the embodiment shown in Figs. 4, all the four sides of the heating board are surrounded by the frame, additional longitudinal and/or transverse frames may be provided therein if further strength is needed.

The frame 42 may be formed only of a reinforcing material such as wood material. However, as shown in Fig. 4 (1), the frame has preferably a laminated structure of a reinforcing material 48 and a vibration- and sound-proof material 47. In this case, the frame 42 may have a laminated structure wherein the position of the reinforcing material 48 and the vibration- and sound-proof material 47 are reversed or a three or more -layered structure. Specific examples of materials for the reinforcing material 48 are wood, plywood, and light plastics. The vibration- and sound-proof material 47 is formed from a material which can provide an oscillation-damping effect and has a repulsive force which can withstand the load applied from the top. Specific examples of such a material are rubber sheet materials containing chloroprene as the base material; modified asphalt-based sheet materials; compressed urethane foam materials; polyethylene foam materials; and those obtained by blending any of these materials with fillers and additives for enhancing the oscillation-damping effect.

As shown in Fig. 4 (1), the planar heating element 44 is disposed on the upper surface of the frame 42 formed in a laminated structure; the reinforcing sheet 45 is disposed on the lower surface of the frame 42; and the heat-insulating material 43, wiring, and a safety are disposed inside the frame 42. Whereby, the planar heating element is fixed on the upper surfaces of the frame and the heat-insulating material, and the reinforcing sheet is fixed on the lower surface of the frame and the heat-insulating material thereby enhancing the total strength of the electric heating board. The planar heating element 44 may be disposed such that the insulation part thereof is located on the frame. As a result, a space capable for adhering, nailing, fitting, or screwing can be ensured. Such a space may be formed by laminating the above-described reinforcing material and vibration- and sound-proof material thereby suppressing the propagation of sound from the floor material on the electric heating board to the sub-floor material disposed below the electric heating board and thus obtaining a floor heating structure with excellent silent properties.

The heat-insulating material 43 is preferably a light weight material which has a heat insulation effect and a heat resistance to the temperatures at which the planar heating element is usually used in order to suppress the planar heating element from releasing the heat from the rear side and conduct heat to the upper floor material efficiently. For example, expanded resins such as expanded polyurethane, expanded polyethylene, and expanded polypropylene; wood fiber molded bodies such as hard wood fiber plates and light-weight wood fiber plates; and felt mats formed from synthetic fibers such as polyester fibers and polyetheretherketone fibers are used as the heat-insulating material 43.

The planar heating element 44 is fixed on the upper surface of electric heating board. No particular limitation is imposed on the planar heating element. However, a planar heating element containing carbon fiber as a heating resistor is preferably used in view of durability and far infrared ray radiation efficiency. Furthermore, the planar heating element is preferably a thin-type element whose thickness is preferably 2 mm or less, more preferably 0.8 mm or less in order to obtain a space-saving thin panel. Preferred examples of the planar heating element which can be used in the present invention are those disclosed in Japanese Patent Laid-Open Publication Nos. 8-207191 and 2000-133422. The heating element preferably used in the present invention will be described later.

The reinforcing sheet 45 is fixed on the lower surfaces of the heat insulating material and the frame so as to enhance the strength of the electric heating board and protect the internal circuit therein. Materials for the reinforcing sheet are exemplified by unwoven cloth known as WARIFU sheet (trade name) formed from polypropylene, polyethylene, or polyester; laminates of such a WARIFU sheet and paper; various waterproof sheet of asphalt- or plastic-based; plastics molded plates such as of Bakelite; and metal plates of such as of tin, aluminum, and stainless. Two or more of these materials can be used at the same time.

The heat equalizing material 46 equalizes the heat generated from the planar heating element and conducts the heat to the floor material. Examples of the heat equalizing material are metal foils and plates, more specifically those of aluminum or copper.

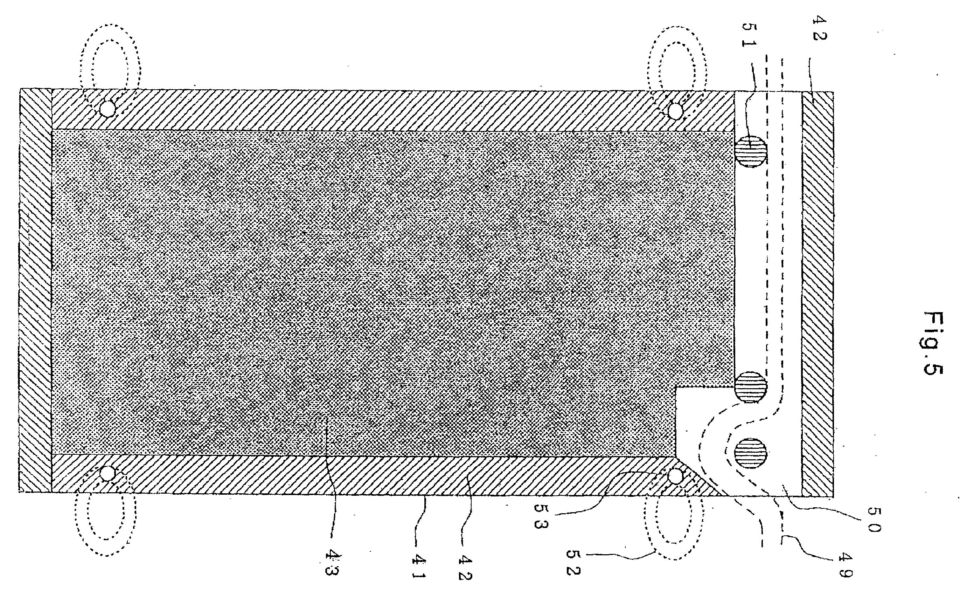

Fig. 5 schematically shows a preferred embodiment of the electric heating board suitable for preparing a panel by connecting foldably a plurality of electric heating boards.

As shown in Fig. 5, the frame 42 of the electric heating board 41 is provided with holes 53 each through which a connecting belt 52 is lead. The number of holes 53 is more than one, preferably two per the side of the frame which comes into contact with the adjacent boards so as to prevent a plurality of folded boards from twisting when they are unfolded and make the folding work for packaging and the unfolding work upon installation easy. Since the connecting belt can be adjusted in length, the space between the respective adjacent electric heating boards when connected to each other can be adjusted. Therefore, the connecting belt can be corresponded to various thickness electric heating boards. The connecting belt may be loop-like plastics, string, or wire. Particularly preferred is a plastics-made tool used for tying an electric cord, so-called "insulation lock" in view of strength, treatability, easiness for cutting after installation, and cost.

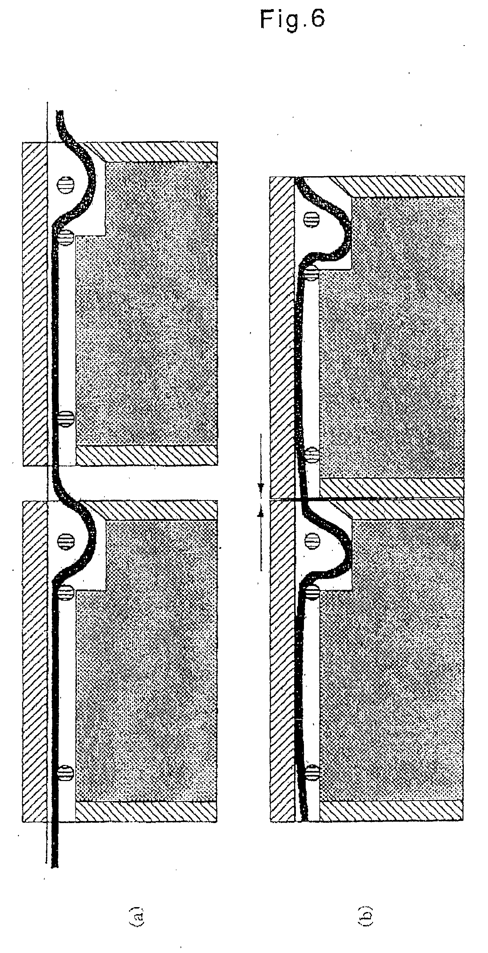

Each of the electric heating board 41 has in an interior in a vicinity of the outer peripheral on one side of the board, a space as housing 50 for accommodating a power line 49 (including an earth wire) such that wiring with a single common power line, a so-called crossover wiring can be established between a plurality of boards. The housing 50 is provided along one side of the board in the form of a through-spacing extending from one end to the other thereof such that the respective electric heating boards are connected to one after another with a single power line. In the case where a plurality of electric heating boards are arranged in parallel with their connecting parts (longitudinal sides) contacting to each other and a crossover wiring of the power line is provided between the respective heating boards, an excess length of the power line (a portion necessary when the heating boards are folded) can be accommodated in the housing 50. Figs. 6 show schematically a state where a power line is accommodated in the housings when adjacent electric heating boards are laid with contacting each other. As shown in Fig. 6 (a), when the electric heating boards are unfolded, the power line of about 30 mm in length are exposed in a space between the adjacent electric heating boards. However, as shown in Fig. 6 (b), after the adjacent electric heating boards are laid, with contacting each other, the exposed power line can be accommodated in the housing 50 formed in the electric heating board. The housing is provided with guides 51 for guiding and fixing the power line 49. All or a part of the guides 51 may be those also serving as electrode caps for diverging the power line 49 to the planar heating element 44.

The electric floor heating panel used in the present invention is composed of a predetermined number of electric heating boards each foldably connected to the adjacent boards by means of connecting belts.

The electrical connecting means for the electric heating boards is a power line having a proper specification for the rated current calculated from the power of the whole panel comprising a predetermined number of heating boards and formed in accordance with various regulations on electric wirings. In the sense of electric circuit, all the predetermined number of electric heating boards are connected to the power line in parallel, and the connecting parts are accommodated in an interior of each of the electric heating board.

Next, described will be the procedures for laying the electric floor heating panel composed of a predetermined number of electric heating boards connected with folded.

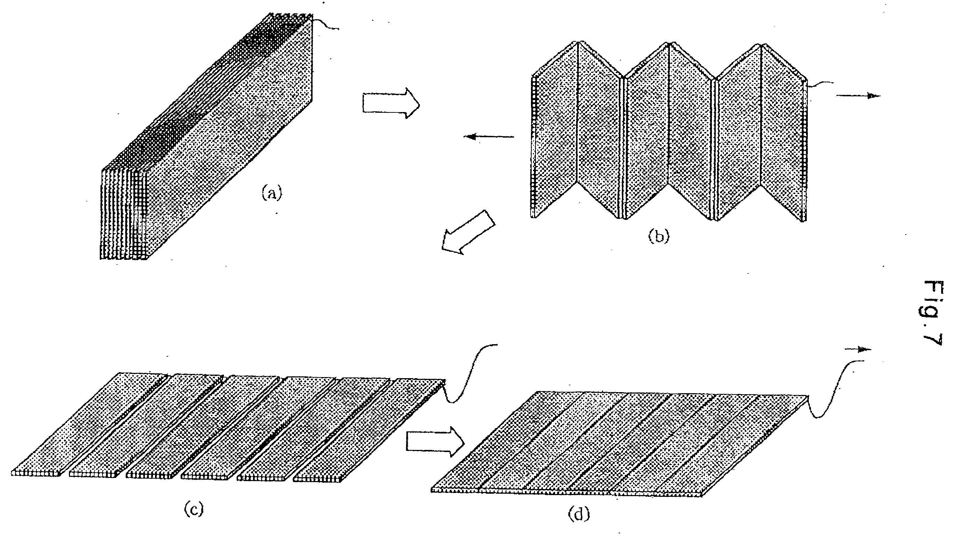

Figs. 7 schematically show the procedures for unfolding and laying the electric floor heating panel composed of a predetermined number of electric heating boards connected with folded, on a sub-floor.

As shown in Figs. 7 (a) to (d), the panel is such packaged that the electric heating boards are alternately folded at the connecting portions (a). After the panel is carried in a laying site and unpackaged, it is pulled so as to unfolding the electric heating boards (b). Aftertherearsideofthepanel, with folded is brought into contact with a sub-floor, the panel is laid by pulling the terminal heating boards in the horizontal direction so as to unfold the electric heating boards (c). The panel in step (c) is laid, with the respective adjacent heating boards spaced about 30 mm apart therebetween, as a clearance of bending. The panel laid with such spaces is not preferable in terms of installation layout because the panel would not fit the area of the room in which the panel is to be installed even though the size of the panel is set to the predetermined laying area. Therefore, the laying of the panel is completed by pushing the electric heating boards such that the respective adjacent boards are brought into contact with each other (d).

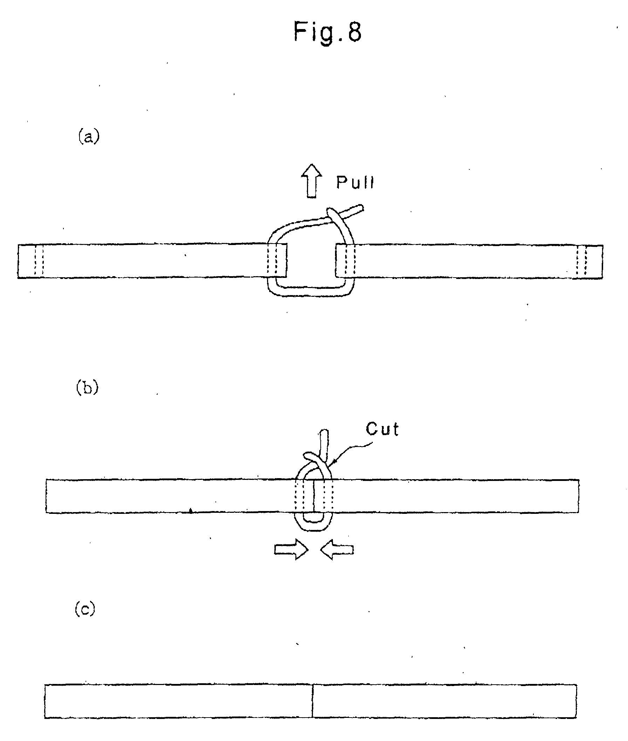

Figs. 8 are views for describing a method of bringing the respective adjacent electric heating boards into contact with each other. As shown in Figs. 8 (a) to (c), the respective adjacent electric heating boards can be laid with contacting with each other, by pulling upwardly and tightening a connecting belt connecting the adjacent heating boards so as to move them toward the center and be in contact with each other and then by cutting and removing the connecting belt. The laying position of all the panels in the room can be determined by laying the heating boards with contacting with each other. Furthermore, the nailing positions on a floor material for the subsequent floor finishing step can be determined, thereby avoiding troubles caused by for example miss-nailing.

The panel used in the present invention can be laid and installed by unfolding the heating boards by only one person and is free from the connection work for connecting the power line between the individual heating boards thereby drastically reducing the installation time. Furthermore, the panel can be laid without any special technical skill. The sub-floor on which the panel is installed may be a wood sub-floor, a concrete sub-floor, or a dry type noise-insulating double floor.

The description of the heating element preferably used in the present invention will be followed.

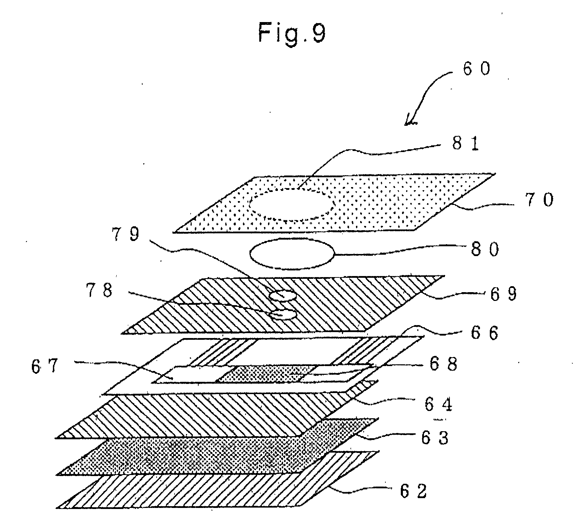

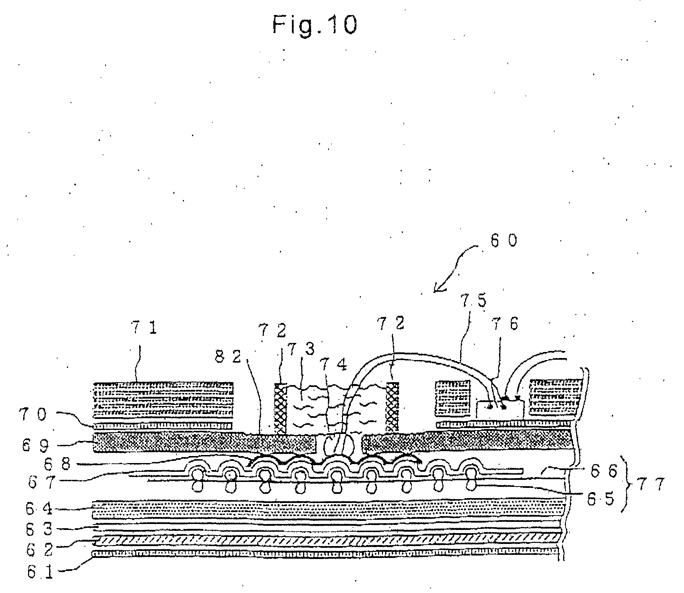

Fig. 9 is an exploded perspective view of a preferred example of the heating element used in the present invention, while Fig. 10 is a cross sectional view of the electrode parts of the heating element.

As shown in Figs. 9 and 10, the heating element 60 is laminate-structured such that a mesh-structured body 77 formed by a non-conductive fiber 65 and a conductive fiber 66 is sandwiched by resin materials, ceramic materials or metallic materials. Below the mesh-structured body 77 are laminated a fiber-reinforced resinous prepreg sheet 64 for protecting the lower surface fiber of the mesh-structured body; a resin-coated film 63; a heat equalizing material 62; and a protective film 61. On the mesh-structured body 77 are laminated an electrode 67 connected therewith; an anchor part 68 disposed on the upper surface thereof; a fiber-reinforced resinous prepreg sheet 69 having a through-hole for a lead wire; a resin film 70 having a through-hole for a lead wire; and a heat-insulating material 71. A lead wire 75 is connected with the anchor part 68, and the connecting part is molded with a resin 73.

First of all, the mesh-structured body 77 will be described.

The mesh-structured body 77 comprises a non-conductive fiber 65 and a conductive fiber 66 and is mesh-structured by joining these fibers together by heating thermoplastic resins or thermoplastic resinous fibers contained therein so as to be fused at their intersection points.

Any fiber can be used as the non-conductive fiber 65 as long as its conductivity is $10^{-5}$ S/m or lower, preferably $10^{-9}$ S/m or lower. Preferred are glass fibers, aramidfibers, ceramic fibers, alumina fibers, and nylon fibers. Their heat resistant temperatures are usually 80 °C or higher, preferably 100 °C or higher, and more preferably 150 °C or higher. The non-conductive fibers are preferably continuous fibers and are composed of 10 to 100,000 filaments, preferably 500 to 12,000 filaments.

Any fiber can be used as the conductive fiber 66 as long as it is a conductive fiber which can be used as a heating element. Preferred are those having a conductivity of from 10 to $10^7$ S/m, preferably $10^3$ to $10^7$ S/m, and more preferably $10^4$ to $10^6$ S/m. The conductive fibers are exemplified by those comprising a resin wherein carbon black or metallic particles are dispersed; conductive polymeric fibers formed by polyacetylene, polypyrrole, or polypyridine only or those obtained by doping them with metal; metals and stainless such as iron, copper, nickel, and chromium; metal fibers of an alloy such as Ni-Cr, Ni-Cu-Fe, and Ni-Cu; carbon fibers. Preferred are carbon fibers because of their excellent properties such as easy availability, lightweight, flexibility, corrosion resistance, and tensile strength.

Any type of carbon fibers such as pitch-, polyacrylonitrile (PAN)-, and cellulose-based carbon fibers can be used as the conductive fiber. Although the carbon fibers has orientation and is improved in conductivity as calcined at higher temperatures, preferred carbon fibers are those calcined at a temperature of from 800 to 3,300 °C, preferably 1,100 to 2,800 °C and/or under a tension of from 0.5 to 10 g/filament, preferably 1 to 5 g/filament.

The conductive fibers are preferably continuous fibers and are formed by bundling 10 to 100,000 filaments, preferably 500 to 12, 000 filaments of conductive fibers.

The above-described conductive and non-conductive fibers may be twisted. In the case where the above-described conductive and non-conductive fibers are combined fibers, they may be twisted after combined. In the other cases, the fibers may be twisted in any stage. Particularly, the twisted conductive fibers are decreased in the amount of fluff. No particular limitation is imposed on the degree of twisting. However, the fibers are twisted preferably to an extent that they are compressed and thus flattened at intersections in the mesh structure so as to be well-fused.

At least either one of the conductive or non-conductive fiber may be a composite fiber containing a thermoplastic resin or a thermoplastic resinous fiber at an arbitrary proportion, for example, containing preferably 5 to 70 percent by mass, more preferably 10 to 60 percent by mass of a thermoplastic resinous fiber. The term "composite fiber" used herein denotes (1) one bundle of 100 to 100, 000 filaments of the above-described conductive or non-conductive fiber covered with a thermoplastic resin; (2) 100 to 100,000 filaments of the above-described conductive or non-conductive fiber mixed and combined with a thermoplastic fiber as one bundle; and (3) one bundle of the conductive or non-conductive fiber on which a thermoplastic resinous fiber is adhered regularly or at random.

The method for covering the fibers with a thermoplastic resin may be any method such as extrusion, dipping the fibers in a heat-melted or emulsified thermoplastic resin, spraying, and electrostatic coating as long as the exterior or interior, particularly exterior of the fiber bundle is covered with the resin. Alternatively, the fiber bundle may be covered with two or more layers using two types of resins different in physical/chemical structures such as melting point, molecular weight, and chemical composition. In the case where the outer layer thermoplastic resin is lower in melting point than the inner one, the fibers can be covered therewith sufficiently and be joined together at intersections easily. The fibers may be combined by mixing 100 to 100,000 filaments of each fibers uniformly using air flow (air jet).

The thermoplastic resins and thermoplastic resinous fibers used in the present invention may be any resins as long as they are those generally known as thermoplastic resin. Preferred are nylon resins, liquid crystalline aromatic polyamide resins, polyester resins, liquid crystalline aromatic polyester resins, polypropylene resins, polyether sulfone resins, polyphenylene sulfide resins, poletheretherketone resins, polysulfone resins, polyvinyl chloride resins, vinylon resins, aramid resins, and fluorine resins. The melting point of the above-exemplified thermoplastic resins is 80 °C or higher, preferably 100 °C or higher, and more preferably 150 °C or higher.

The thermoplastic resins and thermoplastic resinous fibers to be combined with the conductive fibers may be conductive resins or conductive resinous fibers formed from thermoplastic resins or thermoplastic resinous fibers wherein carbon black or metallic particles such as silver and copper are dispersed. The conductive resins or conductive resinous fibers have preferably a conductivity of from $10^{-2}$ to $10^5$ S/m.

The mesh-structured body may be formed into any mesh structure with any mesh-opening size using the above-described conductive and non-conductive fibers.

The mesh structure may be of any mesh structure such as various woven structure obtained by plain-weaving, diagonal-weaving, satin-weaving, leno-weaving, and imitation gauzing and a mesh non-woven structure, so-called braided fabric structure obtained without using loom, such as parallel crossed braided fabric, three axial braided fabric, and multi-axial braided fabric. However, preferred are those obtained by braiding the fibers because they can be produced easily. No particular limitation is imposed on the arrangement of the fibers when they are mesh-structured. For example, there may be used methods such as wherein the mesh structure is formed by (a) weaving or braiding the conductive fibers arranged in a specific direction such as the warp direction and the non-conductive fibers arranged in the right angle direction with respect to the conductive fibers and (b) weaving or braiding the conductive fibers arranged in a specific direction such as the warp direction and the non-conductive fibers arranged in the same and one more different direction.

The mesh-structured body may be formed by any of a method wherein the non-conductive fibers are disposed on the top and bottom of the conductive fibers and a method wherein the non-conductive fibers are disposed only on the top or bottom of the conductive fibers. However, a method is preferably used wherein the conductive fibers sandwiched by the non-conductive fibers braided or woven with a large mesh-opening size are fused in order to protect the conductive layers. When the conductive fibers arranged as described above are melted and fused at intersections by heating, the intersections has a compressed cross section and thus an increased surface area. The conductive fibers are enhanced in heating efficiency at such increased surface area.

The conductive fibers are not necessarily arranged uniformly in the mesh-structured body. As long as the conductive fibers are arranged in the manner of the above-described arrangement (a) or (b), two or more, preferably 5 to 15 bundles of the conductive fibers are prepared as one block, and two or more blocks of bundles are spaced apart from each other. The conductive fibers in each block are arranged in parallel, spaced 1 to 100 mm, preferably 3 to 50 mm apart from each other. The blocks are arranged in parallel, spaced 10 to 300 mm, preferably 30 to 150 mm apart from each other. Furthermore, the blocks may be aligned in the same direction, spaced 10 to 1,000 mm, preferably 30 to 500 mm apart such that the conductive fibers therein are aligned in the same direction.

Mesh-opening between the conductive fibers and between the non-conductive fibers may be formed within an arbitrary range according to the purposes. However, the conductive fibers and the non-conductive fibers are preferably mesh-opened such that the fibers do not fused to each other at portions other than the above-described intersections. The lower limit of mesh-opening size is 1 mm or more, preferably 2 mm or more, more preferably 5 mm or more, and most preferably 10 mm or more, while the upper limit is 500 mm or less, preferably 100 mm or less, and most preferably 50 mm or less. The term "mesh-opening" denotes a space between the respective adjacent fibers including the conductive fibers and the non-conductive fibers. When the mesh-opening size is smaller than the lower limit, the fibers would fuse to each other at portions other than the intersections. Therefore, the resulting mesh-structured body would be lost in flexibility and thus reduced in workability, leading to a difficulty in transporting as it is rolled. Furthermore, not only the exposed surface area of the conductive fibers would be decreased, but also it would be difficult to make the connection between the conductive fibers and the electrode due to the formation of bubbles caused by insufficient deaeration. The mesh-opening size larger than the upper limit would cause decrease in the strength of the mesh-structured body and in the heating efficiency and reinforcing effect of the heating element.

The mesh-structured body can be produced by forming the conductive fibers and the non-conductive fibers in a mesh-structure and by heating the fibers so as to fuse and join the thermoplastic fibers or the thermoplastic resinous fibers at the intersections of the conductive fibers and the non-conductive fibers. The heating temperature may be any temperature which is equal to or higher than a temperature at which the conductive fibers and the non-conductive fibers can be fused and is preferably a temperature or higher at which the thermoplastic resins or the thermoplastic resinous fibers melt, generally within the range of 100 to 400 °C. The method of heat-fusing may be any method such as contact-bonding using a press or heat rollers or thermal-fusing conducted in a high-temperature bath under tensioning or non-tensioning conditions or conducted by blowing hot air.

The thermoplastic resins and the thermoplastic resinous fibers are necessarily heat-melted and fused at least their intersections. However, as long as the intersections are fused completely, there is no problem even though the interior or a part of the thermoplastic resins and thermoplastic resinous fibers may not be melted completely. Furthermore, no problem arises even though the whole of the thermoplastic resins and thermoplastic resinous fibers are heat-melted at the portions other than the intersections or a part of the fibers remains unmelted.

After the above-described heating, the resulting mesh-structured body is cooled to the atmospheric temperature. After the edges of the body are trimmed so as to be a designed size, the body may be reeled by a reeling machine. Alternatively, the mesh-structured body may be cut or molded to be in a proper width and length. Since the intersection of the mesh-structured body are fused, it can be formed into any shape with ease.

Next, described will be the procedures of producing the heating element 60 using the mesh-structured body.

First of all, a sheet of mesh-structured body 77 formed in a proper length is arranged; the electrodes 67 are arranged on both ends of the conductive fiber 66; and the anchor part 68 formed by a conductive fiber or a conductive mesh body having a roughness on its surface is formed on the electrode.

A plurality of the mesh-structured body 77 may be used. In such a case, they are arranged in parallel at arbitrary or equal intervals. Alternatively, other than the electrodes arranged on both ends of the mesh-structured body, one or more auxiliary electrodes may be formed on an intermediate portion of the body so as to make the temperature distribution uniform. The anchor part 68 may be laminated on the electrode 67 so as to be a part thereof, as shown in Figs. 9 and 10.

The electrode 67 is preferably a metal foil piece of copper or aluminum. The electrode has a width of 5 to 100 mm, preferably 10 to 50 mm. Since the use of a metal foil piece as the electrode 67 can prevent the resin from soaking from the fiber-reinforced resinous prepreg sheet 69 and covering the anchor part when the heating element is produced, the through-opening 78 will not be clogged.

Examples of the conductive fiber or conductive mesh body used for the anchor part 68 include metal fibers, metal wire gauzes, woven metal fibers, punching metals, expanded metals, metal mesh belts, woven organic conductive fibers, and meshes of conductive plastics. The woven materials and mesh belts have preferably an mesh-opening size of from 10 to 500 mesh. The punching metals are preferably those with an opening rate of 10 to 60 percent. When expanded metals are used, those of an SW of 0.1 to 30 mm can be used. No particular limitation is imposed on the weaving form of the woven materials which, therefore, may be any of those selected from plain-weaving, diagonal-weaving, satin-weaving, imitation gauzing, plain-Dutch weaving, twilled-Dutch weaving, diamond-shape weaving, hexagonal weaving, crimp weaving, Dutch weaving, round weaving, twisted weaving, standard twilled weaving, and triple weaving.

Next, a fiber-reinforced resin prepreg sheet 69 having a through-opening 78 for a lead wire is laminated on the electrode side of the mesh-structured body 77 with the anchor part 68, while a fiber-reinforced resin prepreg sheet 64 without such an opening is laminated on the side, opposite to the electrode side, of the mesh-structured body 77. A peelable film 80 with excellent peelability is laminated on the fiber-reinforced prepreg sheet 69 so as to cover the through-opening 78 and the periphery of a width of 30 to 60 mm, and a resin film 70 having a through-opening for the lead wire is laminated on the peelable film 80. On the other hand, a resin-coated film 63, a heat-equalizing material 62, and a protective film 61 are laminated on the fiber-reinforced resin prepreg sheet 64 and heat-pressed so as to be formed into a fiber-reinforced resin molded body.

Reinforcing fibers which can be used for the fiber-reinforced resin prepreg sheets 64, 69 are preferably non-conductive fibers such as glass fibers, aramid fibers, ceramic fibers, alumina fibers, and nylon fibers. More preferred are glass fibers. Whereby, the fiber-reinforced resin prepreg sheets 64, 69 are increased not only reinforcing effect but also in insulation effect. These reinforcing fibers may be of fiber structures such as of woven and non-woven structures and unidirectional material structure. The thickness of the fiber-reinforced resin prepreg sheet is from 0.05 to 0.5 mm. The prepreg sheet 64 of a thickness of this range is particularly preferable because heat is easily conveyed to the heat-equalizing material 62.

Instead of arranging the fiber-reinforced resin prepreg sheets, the mesh-structured body may be dipped with a matrix resin in a mold. Any type of resin may be used depending on the application. Preferred are thermoplastic resins and thermoset resins. Preferred examples are polyetheretherketone resin, polyphenylenesulfide resin, polyamideimide resin, polyester resin, polyimide resin, phenol resin, epoxy resin, and unsaturated polyester resin. Resins to be used are preferably heat-resistant and may be those heat-resistant to 80 °C or higher, preferably 100 °C or higher, and more preferably 150 °C or higher. In the case where the mesh-structured body is dipped with a matrix resin, each of the electrode 67 and the anchor part 68 has preferably a melting point which is higher than the thermosetting temperature or heat-melting temperature of the matrix resin and is preferably heat-resistant.

The through-opening 78 of the fiber-reinforced resin prepreg sheet 69 has a diameter of 5 to 50 mm. Since a portion of the anchor part 68 exposes through the through-opening 78, a power line can be connected therethrough after the heating element is formed. Before forming the heating element, the through-opening 78 may be covered with the peelable film (peelable lid) 79. The lid is peeled off for connecting the power line after forming the heating element.

The peelable films 79, 80 may be a fluorine resin, a silicone resin, or a mesh sheet coated with fluorine resin. The diameter of the peelable film 80 is generally made larger than that of the peelable film 79. A mesh- or network-like film with a rugged surface, such as a mesh-like fluorine resin coating sheet is preferably used as the peelable film 80 because a rugged surface 82 is formed on the prepreg sheet 69 with the through-opening and can increase the adhesivity with a resin 73 for embedding the electrode connecting part such as solder 74, with an anchor effect. The resin film 70 with a through-opening for a lead wire is exemplified by PET film.

The resin-coated film 63 is preferably a PET film coated with epoxy resin in an amount of 15 to 50 mass percent/m$^2$. The heat equalizing material 62 may be a metal plate or a metal foil of a material with excellent heat conductivity, such as copper and aluminum. The protective film 61 is preferably a PET film. The protective film is peeled off when the panel is laid.

The above-described materials are laminated on both sides of the mesh-structured body 77 in sequence and pressed and heated thereby forming into a fiber-reinforced resin molded body. The pressure applied to the laminate is usually from 49 x 10$^4$ to 49 x 10$^5$ Pa, preferably 147 x 10$^4$ to 245 x 10$^4$ Pa. The heating temperature is usually from 100 to 200 °C, preferably 120 to 150 °C. The heating/pressing time is usually from 20 minutes to 5 hours, preferably 25 minutes to 30 minutes.

Thereafter, the resin film 70 is cut along the periphery of the peelable film 80. The peelable film and a part 81 of the resin film are removed from the laminate, and then the fluorine resin peelable film lid 79 covering the through-opening for a lead wire is removed thereby providing the fiber-reinforced resin molded body with a surface through which the anchor part 68 exposes.

Thereafter, one end of a heat resistant lead wire 75 used as the power line is connected through the anchor part to the electrode by soldering 74 and further molded with a resin 73. Due to the molding with the resin 73, the power line and the electrode can be firmly connected. The other end of the lead wire 75 is connected to an overheat-preventing device 76 such as a thermostat, filaments, or a thermocouple.

The resin molding 73 is formed over a diametric range from the periphery of the electrode of from 20 to 60 mm using a thermosetting resin such as epoxy resin or a thermoplastic resin such as an ethylene/vinyl acetate copolymer (EVA)-based hot melt resin. Before the molding 73 is formed, a frame 72 of non-conductive resin (bushing) is formed around the molding, and then the thermosetting resin or the thermoplastic resin are filled therein. The thickness of the non-conductive resin frame 72 may be the same as that of a heat insulating material 71 described later.

After the lead wire 75 is connected, the fiber-reinforced resin molded body is covered with a heat insulating material 71 and fixed thereon with thermosetting resin. The insulating material may be any type of material and is preferably polyester felt. In such a case, the heat insulating material is fixed after the portions through which the electrode peripheral portion, the lead wire, and the overheat preventing device part expose are punched out.

By the above-described procedures, the heating element used in the present invention can be produced. The resulting heating element is 200 Mpa or more, preferably 300 MPa or more, and more preferably 400 Mpa or more in resistance to load when a localized stress is applied to the heating element. Furthermore, the heating element has such water resistant insulating properties that it exhibits an insulation resistance of 1 M$\Omega$ or higher, preferably 10 M$\Omega$ or higher even though it is dipped in water at a temperature of 25 °C for 24 hours.

[Brief Description of the Drawings]

Fig. 1 is a schematic cross sectional view of the structure of a floor heating system according to the present invention.

Figs. 2 are graphs describing the relation of the upper material and the heat diffusing material for panels with various maximum powers.

Fig. 3 shows schematically an apparatus used for measuring the contacting temperature between a human body and a floor surface.

Figs. 4 show schematically a preferred embodiment of a electric heating board constituting a electric floor heat panel used in the present invention.

Fig. 5 shows schematically a preferred embodiment of a electric heating board suitable for a panel produced by foldably connecting a plurality of electric heating boards.

Figs. 6 show schematically a state wherein a power line is accommodated in a electric heating board when adjacent electric heating boards are laid, with contacting each other.

Figs. 7 are schematical views for describing the procedure for unfolding and laying a panel formed by connecting a predetermined number of electric heating boards, with folded on a sub-floor.

Figs. 8 are schematical views for describing a method for laying adjacent electric heating boards in contact with each other, using a connecting belt connecting the adjacent electric heating boards.

Fig. 9 is an exploded cross sectional view of a preferred embodiment of a heating element used in the present invention.

Fig. 10 is a cross sectional view of an electrode of a heating element.

[Best Mode for Carrying out the Invention]

The present invention will be described in more details with reference to the following Examples and Comparative Examples.

[Example 1]

An upper material of a 0.5 mm thickness (d) wood veneer, a heat-diffusing material of a 400 $\mu$m thickness (t) aluminum, and a lower material of a 12 mm thickness plywood were prepared, respectively. An adhesive (aqueous vinylurethane resin KR470 manufactured by Koyo Sangyo, Co., Ltd.) is applied in a coated amount of 150 g/m$^2$ on the connecting surfaces of each of the materials so as to laminate the materials. The laminated materials are united by heat-pressing thereby preparing a floor material.

The following panel is used as a floor heater.

An electric heating board shown in Fig. 5 was produced. This electric heating board has a cross sectional structure shown in Figs. 4. The frame has a dual structure of a reinforcing material with 30 mm width and 5.5 mm thickness and a vibration- and sound-proof material formed by a spacer obtained by adding additives to a 2.5 mm thickness expanded polyethylene with 7-fold expansion rate. A heat-insulating material of an expanded polyethylene with 30-fold expansion rate is arranged inside the frame. A planar heating element shown in Fig. 4 was attached on the upper surface of the frame, while a reinforcing sheet was attached on the lower surface. Furthermore, a heat-equalizing material was attached on the upper surface of the planar heating element. The planar heating element had a thickness of 0.5 mm, the reinforcing sheet had a thickness of 0.5 mm, and the total thickness of the electric heating board was 9 mm.

The minimum value (lower limit value) (p1) of the maximum power of the panel was set to 65 W/m$^2$ in conformity with the area of the room wherein the panel is installed. This value was calculated from the above described equation [(the maximum heat load per unit area predetermined according to the type of a building such as wooden houses or reinforced concrete condominiums) / 0.7 (the maximum installation area rate)] providing the minimum value (p1).

A panel comprising 6 sheets of the 200 W electric heating boards obtained above was prepared for a 6 tatami mat room (10 m$^2$). The total power of the panel was thus 1,200 W. Each of the electric heating boards had a size of 1,820 mm x 455 mm x 9 mm, and the total installation rate of the panel of the 6 electric heating boards in the room was 50 percent.

The floor heating device was adjusted such that its power is 180 W/m$^2$ which was the maximum power, and operated in a room controlled using an air conditioning system such that the room temperature was kept constant at a temperature of 20 °C.

The contact temperature between a human body and a floor surface was evaluated using a floor contact temperature estimating apparatus "EFCT meter". The contacting temperature was a temperature when equilibrium was reached. The result is shown in Table 2 below.

The numerals 31 to 33 in Fig. 3 showing of the floor contact temperature estimating apparatus indicate as follows:

| 31(main body): | a 2.0 mm thickness bath made from acrylic resin size : 100 mm x 100 mm x 100 mm |
|---|---|
| 32: silicone rubber product name : | YE5822, manufactured by GE Toshiba Silicones |
| 33: felt product name : | Toyobo Spunbond 4301N, manufactured by TOYOBO Co., Ltd. material : 100 % polyester thickness : 2.7mm |

[Comparative Examples 1 to 4]

Electric floor heating systems were produced by following the same procedures of Example 1 except that the thickness (t) of the aluminum heat-diffusing material was changed to 0 µm (Comparative Example 1), 30µm (Comparative Example 2), 80µm (Comparative Example 3), and 200 µm (Comparative Example 4). The contact temperature between a human body and a floor surface was measured in the same manner. The results are shown in Fig. 2.

Table 2

| | Floor Heating Maximum Power p2 (Wm$^2$) | Heat- Diffusing Material Thickness t (µm) | Upper Material Thickness d (mm) | Contacing Temperature between a Human Body and a Floor Surface (°C) |
|---|---|---|---|---|
| Example 1 | 180 | 400 | 0.5 | 41.3 |
| Comparative Example 1 | 180 | 0 | 0.5 | 48.1 |
| Comparative Example 2 | 180 | 30 | 0.5 | 46.4 |
| Comparative Example 3 | 180 | 80 | 0.5 | 44.8 |
| Comparative Example 4 | 180 | 200 | 0.5 | 42.8 |

It is apparent from the results shown in Table 2 that in the case of using a panel whose maximum power is 180 W/m$^2$, the floor material composed of the heat diffusing material and the upper material each having a thickness as defined in Examples 1 can suppress the contact temperature between a human body and the floor surface to 42 °C or lower which is generally recognized as a temperature at which no irreversible change occurs in human body tissues.

[Example 2]

Example 1 was repeated except that a 200 µm thickness (t) heat-diffusing material was used and the thickness of the lower material of a plywood was selected such that the total thickness of a floor material is 12 mm, thereby obtaining a floor material. An electric floor heating system was installed using the floor material thus obtained in the same manner.

The heating system was operated in the same manner of Example 1 except that the power of the heating device whose maximum power was 140 $W/m^2$ was adjusted to 126 $W/m^2$ and evaluated in the same manner. The result was shown in Table 3.

[Example 3]

Example 2 was repeated except that the power of the heating device whose maximum power was 160 $W/m^2$ was adjusted to 157 $W/m^2$. The system was evaluated in the same manner. The result was shown in Table 3.

[Comparative Example 5]

Example 2 was repeated except that the heating device with the maximum power of 180 $W/m^2$ was used and operated at the maximum power. The system was evaluated in the same manner. The result was shown in Table 3.

[Example 4]

Example 2 was repeated except that a 5.5 mm thickness (d) upper material was used. The result was shown in Table 3.

[Comparative Examples 6 and 7]

Example 4 was repeated except that the power of the heating device whose maximum power was 160 $W/m^2$ was adjusted to 157 $W/m^2$ (Comparative Example 6) and the power of the heating device whose maximum power was 180 $W/m^2$ remained 180 $W/m^2$ (Comparative Example 7). The systems were evaluated in the same manner. The results are shown in Table 3.

[Example 5]

Example 2 was repeated except that a 9.0 mm thickness (d) upper material and a 230 μm thickness (t) heat-diffusing material were used. The system was evaluated in the same manner. The result was shown in Table 3.

[Comparative Examples 8 and 9]

Example 5 was repeated except that the power of the heating device whose maximum power was 160 $W/m^2$ was adjusted to 157 $W/m^2$ (Comparative Example 8) and the power of the heating device whose maximum power was 180 $W/m^2$ remained 180 $W/m^2$ (Comparative Example 9). The systems were evaluated in the same manner. The results are shown in Table 3.

Table 3

| | Floor Heating Maximum Power p2 (W m²) | Heat-Diffusing Material Thickness t (μ m) | Upper Material Thickness d (mm) | Contacing Temperature between a Human Body and a Floor Surface (°C) |
|---|---|---|---|---|
| Example 2 | 126 | 200 | 0.5 | 39.1 |
| Example 3 | 157 | 200 | 0.5 | 40.6 |
| Comparative Example 5 | 180 | 200 | 0.5 | 42.8 |
| Example 4 | 126 | 200 | 5.5 | 40.3 |
| Comparative Example 6 | 157 | 200 | 5.5 | 42.1 |

Table 3   (continued)

|  | Floor Heating Maximum Power p2 (W m$^2$) | Heat-Diffusing Material Thickness t (μ m) | Upper Material Thickness d (mm) | Contacing Temperature between a Human Body and a Floor Surface (°C) |
|---|---|---|---|---|
| Comparative Example 7 | 180 | 200 | 5.5 | 43.5 |
| Example 5 | 126 | 230 | 9.0 | 41.3 |
| Comparative Example 8 | 157 | 230 | 9.0 | 43.2 |
| Comparative Example 9 | 180 | 230 | 9.0 | 45.3 |

As apparent from the results shown in Table 3, in the case of using the panel whose power is 126 W/m$^2$, the heating system wherein the thickness of the heat-diffusing material is fixed to 200 μm and the thickness of the upper material was set to from 0.5 to 5.5 mm (Examples 2 and 4) and the heating system wherein the thickness of the heat-diffusing material was set to 230 μm and the thickness of the upper material was set to 9.0 mm (Example 5) can suppress the contacting temperature between a human body and the floor surface to 42 °C or lower which is generally recognized as a temperature at which no irreversible change occurs in human body tissues, i.e., a temperature at which low-temperature burn can be prevented. In the case of using the panel whose power is 157 W/m$^2$, the system of Example 3 wherein the floor material is composed of the heat-diffusing material of 200 μm thickness and the upper material of 0.5 mm thickness can set the contact temperature at which low-temperature burn can be prevented.

[Applicability in the Industry]

The use of the electric floor heating system of the present invention can provide a comfortable floor heating without causing low-temperature burn. In the electric floor heating system, the optimum floor material and panel can be selected efficiently and easily in accordance with the maximum power of a electric heating panel to be used and with a floor material to be used.

**Claims**

1.   An electric floor heating system capable of preventing low-temperature burn which system comprises an electric floor heating panel and a floor material placed thereon; wherein said floor material is formed by laminating integrally an upper material having a thickness (d) of from 0.01 to 12 mm and forming the floor surface, a heat diffusing material having a thickness (t) of from 30 to 1,000 μm and disposed below the upper material horizontally to the floor surface, and a lower material whose lower surface contacts the panel; and wherein when said panel is selected from those whose minimum value (p1) of the maximum power is 65 W/m$^2$ and maximum value (p2) of the maximum power is any of (1) to (12) below, said upper material thickness (d) and said heat diffusing material thickness (t) are set to fulfill relational expression (I):

$$t \geqq a \times d^2 + b \qquad\qquad (I)$$

into which coefficients a and b predetermined by the maximum value (p2) of the maximum power are introduced, such that said floor material is so constructed that with the floor surface blocked by a human body and heated by said panel selected, the contacting surface temperature of the human body is kept at 42 °C or below:

(1) when p2 is 140 W/m$^2$, a is 2.1 and b is 50;
(2) when p2 is 150 W/m$^2$, a is 2.9 and b is 71;
(3) when p2 is 160 W/m$^2$, a is 4.5 and b is 113;
(4) when p2 is 170 W/m$^2$, a is 7.6 and b is 163;
(5) when p2 is 180 W/m$^2$, a is 17.9 and b is 228;

(6) when p2 is 230 W/m$^2$, a is 69.4 and b is 553;
(7) when p2 is 240 W/m$^2$, a is 79.7 and b is 618;
(8) when p2 is 250 W/m$^2$, a is 90.0 and b is 683;
(9) when p2 is 260 W/m$^2$, a is 100.3 and b is 748;
(10) when p2 is 270 W/m$^2$, a is 110.6 and b is 813;
(11) when p2 is 280 W/m$^2$, a is 120.9 and b is 878; and
(12) when p2 is 290 W/m$^2$, a is 131.2 and b is 943.

**2.** The electric floor heating system according to claim 1 wherein said heat diffusing material is aluminum.

**3.** The electric floor heating system according to claim 1 or 2 wherein the total thickness of said floor material is from 2 to 40 mm.

**4.** An panel for an electric floor heating, formed by connecting foldably a predetermined number of electric heating boards to each other, wherein said panel is so designed as to cover 60 to 70 percent of a room where said panel is to be installed; the minimum value (p1) of the maximum power of said panel is 65 W/m$^2$ and the maximum value (p2) of the maximum power of said panel is limited depending on a floor material combined therewith; said floor material is formed by laminating integrally an upper material having a thickness (d) of from 0.01 to 12 mm and forming the floor surface, a heat diffusing material having a thickness (t) of from 30 to 1,000 μm and disposed below said upper material horizontally to the floor surface, and a lower material disposed below said heat diffusing material; and when said upper material thickness (d) and said heat dif fusing material thickness (t) fulfill any of the relations of (1) to (12) below, the maximum value (p2) of the maximum power is determined as follows:

(1) when $t \geqq 2.1 \times d^2+50$ is fulfilled, p2 is 140 W/m$^2$;
(2) when $t \geqq 2.9 \times d^2+71$ is fulfilled, p2 is 150 W/m$^2$;
(3) when $t \geqq 4.5 \times d^2+113$ is fulfilled, p2 is 160 W/m$^2$;
(4) when $t \geqq 7.6 \times d^2+163$ is fulfilled, p2 is 170 W/m$^2$;
(5) when $t \geqq 17.9 \times d^2+228$ is fulfilled, p2 is 180 W/m$^2$;
(6) when $t \geqq 69.4 \times d^2+553$ is fulfilled, p2 is 230 W/m$^2$;
(7) when $t \geqq 79.7 \times d^2+618$ is fulfilled, p2 is 240 W/m$^2$;
(8) when $t \geqq 90.0 \times d^2+683$ is fulfilled, p2 is 250 W/m$^2$;
(9) when $t \geqq 100.3 \times d^2+748$ is fulfilled, p2 is 260 W/m$^2$;
(10) when $t \geqq 110.6 \times d^2+813$ is fulfilled, p2 is 270 W/m$^2$;
(11) when $t \geqq 120.9 \times d^2+878$ is fulfilled, p2 is 280 W/m$^2$; and
(12) when $t \geqq 131.2 \times d^2+943$ is fulfilled, p2 is 290 W/m$^2$.

**5.** The panel for an electric floor heating according to claim 4 wherein said predetermined number of electric heating boards are foldably connected to the respective adjacent electric heating boards by putting connecting belts through through-openings provided on edge side portions of the electric heating boards.

**6.** The panel for an electric floor heating according to claim 4 or 5 wherein the heating element of said electric heating board comprises a mesh-structured body formed by joining a non-conductive fiber and a conductive fiber at their intersections; electrodes joined on the both sides of said conductive fiber; an anchor part having a roughness on its surface and disposed on said electrodes; a fiber-reinforced prepreg sheet laminated on said anchor part and having a through-opening for a lead wire; and a resin film 70 laminated on said prepreg sheet and having a through-opening whose diameter is larger than said through-opening, formed into a molded body by a pressure-heating treatment, and said anchor part is molded on its portion corresponding to said through-opening of said prepreg sheet, with a resin.

**7.** The panel for an electric floor heating according to claim 4 which is composed of 2 to 10 electric heating boards.

**8.** The panel for an electric floor heating according to claim 4 wherein said heat diffusing material is aluminum.

**9.** A low-temperature burn preventing floor heating floor material, wherein said floor material is formed by laminating integrally an upper material having a thickness (d) of from 0.01 to 12 mm and forming the floor surface, a heat diffusing material having a thickness (t) of from 30 to 1,000 μm and disposed below said upper material horizontally to the floor surface, and a lower material disposed below said heat diffusing material; said floor material is formed integrally with a panel whose minimum value (p1) of the maximum power is 65 w/m$^2$ and maximum value (p2) of the maximum power is any of those in (1) to (12) below; and said upper material thickness (d) and said heat diffusing material thickness (t) are determined so as to fulfill any of the relations (1) to (12) below corresponding to the maximum value (p2) of the maximum power:

(1) when p2 is 140 W/m$^2$, t $\geqq$ 2.1 x d$^2$+50;
(2) when p2 is 150 W/m$^2$, t $\geqq$ 2.9 x d$^2$+71;
(3) when p2 is 160 W/m$^2$, t $\geqq$ 4.5 x d$^2$+113;
(4) when p2 is 170 W/m$^2$, t $\geqq$ 7.6 x d$^2$+163;
(5) when p2 is 180 W/m$^2$, t $\geqq$ 17.9 x d$^2$+228;
(6) when p2 is 230 W/m$^2$, t $\geqq$ 69.4 x d$^2$+553;
(7) when p2 is 240 W/m$^2$, t $\geqq$ 79.7 x d$^2$+618;
(8) when p2 is 250 W/m$^2$, t $\geqq$ 90.0 x d$^2$+683;
(9) when p2 is 260 W/m$^2$, t $\geqq$ 100.3 x d$^2$+748;
(10) when p2 is 270 W/m$^2$, t $\geqq$ 110.6 x d$^2$+813;
(11) when p2 is 280 W/m$^2$, t $\geqq$ 120.9 x d$^2$+878; and
(12) when p2 is 290 W/m$^2$, t $\geqq$ 131.2 x d$^2$+943.

**10.** The floor heating floor material according to claim 9 wherein said heat diffusing material is aluminum.

**11.** The floor heating floor material according to claim 9 or 10 wherein the total thickness of said floor material is from 2 to 40 mm.

**12.** An electric floor heating device which is the combination of an electric floor heating panel formed by connecting foldably a predetermined number of electric heating boards to each other and a floor material, wherein the minimum value (p1) of the maximum power of said panel is 65 W/m$^2$ and the maximum value (p2) of the maximum power of said panel is limited depending on a floor material combined therewith; said floor material is formed by laminating integrally an upper material having a thickness (d) of from 0.01 to 12 mm and forming the floor surface, a heat diffusing material having a thickness (t) of from 30 to 1,000 $\mu$ m and disposed below said upper material horizontally to the floor surface, and a lower material disposed below said heat diffusing material; and when said upper material thickness (d) and said heat diffusing material thickness (t) fulfill any of the relations of (1) to (12) below, the maximum value (p2) of the maximum power is determined as follows:

(1) when t $\geqq$ 2.1 x d$^2$+50 is fulfilled, p2 is 140 W/m$^2$;
(2) when t $\geqq$ 2.9 x d$^2$+71 is fulfilled, p2 is 150 W/m$^2$;
(3) when t $\geqq$ 4.5 x d$^2$+113 is fulfilled, p2 is 160 W/m$^2$;
(4) when t $\geqq$ 7.6 x d$^2$+163 is fulfilled, p2 is 170 W/m$^2$;
(5) when t $\geqq$ 17.9 x d$^2$+228 is fulfilled, p2 is 180 W/m$^2$;
(6) when t $\geqq$ 69.4 x d$^2$+553 is fulfilled, p2 is 230 W/m$^2$;
(7) when t $\geqq$ 79.7 x d$^2$+618 is fulfilled, p2 is 240 W/m$^2$;
(8) when t $\geqq$ 90.0 x d$^2$+683 is fulfilled, p2 is 250 W/m$^2$;
(9) when t $\geqq$ 100.3 x d$^2$+748 is fulfilled, p2 is 260 W/m$^2$;
(10) when t $\geqq$ 110.6 x d$^2$+813 is fulfilled, p2 is 270 W/m$^2$;
(11) when t $\geqq$ 120.9 x d$^2$+878 is fulfilled, p2 is 280 W/m$^2$; and
(12) when t $\geqq$ 131.2 x d$^2$+943 is fulfilled, p2 is 290 W/m$^2$.

Fig.1

Fig.2

# Fig.3

30

39

40

38

31

37

35

36

Hot Water
37℃

32

Floor Surface

Floor

34

33

# Fig.4

# Fig.5

# Fig.6

(a)

(b)

Fig.7

# Fig.8

(a)

⇧ Pull

(b)

Cut

⇨ ⇦

(c)

## Fig.9

Fig.10

## INTERNATIONAL SEARCH REPORT

| | International application No. |
|---|---|
| | PCT/JP02/09552 |

| A. CLASSIFICATION OF SUBJECT MATTER |
|---|
| Int.Cl⁷ F24D13/02, H05B3/20, E04F15/18 |
| According to International Patent Classification (IPC) or to both national classification and IPC |

| B. FIELDS SEARCHED |
|---|
| Minimum documentation searched (classification system followed by classification symbols)<br>Int.Cl⁷ F24D13/02, H05B3/20, E04F15/18, F24D3/16 |
| Documentation searched other than minimum documentation to the extent that such documents are included in the fields searched<br>Jitsuyo Shinan Koho 1926–1996 Toroku Jitsuyo Shinan Koho 1994–2002<br>Kokai Jitsuyo Shinan Koho 1971–2002 Jitsuyo Shinan Toroku Koho 1996–2002 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 10-266542 A (Nippon Oil Co., Ltd.),<br>06 October, 1998 (06.10.98),<br>Full text; Figs. 1 to 3<br>(Family: none) | 1-12 |
| A | JP 2000-81221 A (Nippon Mitsubishi Oil Corp.),<br>21 March, 2000 (21.03.00),<br>Full text; Figs. 1 to 5<br>(Family: none) | 1-12 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>19 December, 2002 (19.12.02) | Date of mailing of the international search report<br>14 January, 2003 (14.01.03) |
|---|---|
| Name and mailing address of the ISA/<br>Japanese Patent Office | Authorized officer |
| Facsimile No. | Telephone No. |

Form PCT/ISA/210 (second sheet) (July 1998)